(19) Europäisches Patentamt / European Patent Office / Office européen des brevets

(11) **EP 4 394 611 B1**

(12) **EUROPEAN PATENT SPECIFICATION**

(45) Date of publication and mention
of the grant of the patent:
**05.08.2026 Bulletin 2026/32**

(21) Application number: **23190261.0**

(22) Date of filing: **08.08.2023**

(51) International Patent Classification (IPC):
***G06F 12/02*** *(2006.01)*

(52) Cooperative Patent Classification (CPC):
**G06F 12/0246;** G06F 2212/7201; G06F 2212/7211

(54) **METHOD FOR MANAGING VIRTUAL ZONE**

VERFAHREN ZUR VERWALTUNG EINER VIRTUELLEN ZONE

PROCÉDÉ DE GESTION DE ZONE VIRTUELLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.01.2023 KR 20230000352**

(43) Date of publication of application:
**03.07.2024 Bulletin 2024/27**

(73) Proprietor: **Samsung Electronics Co., Ltd.**
**Suwon-si, Gyeonggi-do 16677 (KR)**

(72) Inventors:
• **YANG, Seungjun**
**Suwon-si (KR)**
• **KANG, Nam Wook**
**Suwon-si (KR)**

(74) Representative: **Marks & Clerk LLP**
**15 Fetter Lane**
**London EC4A 1BW (GB)**

(56) References cited:
**US-A1- 2015 095 546    US-A1- 2019 108 889
US-B1- 11 210 168**

EP 4 394 611 B1

**Description**

## FIELD

The inventive concepts relate to virtual zone management.

## BACKGROUND

In a non-volatile memory (NVM) device, data recorded in a cell is maintained without being destroyed even when drive power is not supplied. Among non-volatile memories, flash memory is widely used in computers and memory cards because it has a function of electrically erasing cell data in batches.

In order to perform a request to access a flash memory-based data storage device from an operating system (OS) or a file system, a flash translation layer (FTL) is provided between the OS or file system and the flash memory. The FTL may include mapping information that defines a relationship between a logical address and a physical address of the flash memory. The FTL may convert a logical address into a physical address in flash memory using mapping information.

US-A-2019108889 discloses a non-volatile storage apparatus includes a set of non-volatile memory cells and one or more control circuits in communication with the set of non-volatile memory cells. The one or more control circuits are configured to group physical addresses of the set of non-volatile memory cells into groups of configurable sizes and to individually apply wear leveling schemes to non-volatile memory cells of a group.

## SUMMARY

The invention is set out in the appended set of claims.

The dependent claims set out particular embodiments.

## BRIEF DESCRIPTION OF THE DRAWINGS

FIG. 1 is a block diagram of a storage system according to an example embodiment.

FIG. 2 is a block diagram of the storage controller according to an example embodiment.

FIG. 3 is a block diagram of an example of a non-volatile memory included in a storage device according to an example embodiment.

FIG. 4 is a block diagram of an FTL according to an example embodiment.

FIG. 5 is a flowchart of an operation of setting a zone of an operation method of the storage device according to an example embodiment.

FIG. 6 to FIG. 8 are illustrate an operation of setting a zone in the storage device according to an example embodiment.

FIG. 9 is a flowchart of an operation of mapping a logical address of an operation method of a storage device to a physical address according to an example embodiment.

FIG. 10 to FIG. 12 illustrate an operation of mapping a logical address to a physical address in a storage device according to an example embodiment.

FIG. 13 is a flowchart of wear leveling of an operation method of a storage device according to an example embodiment.

FIG. 14 to FIG. 19 illustrate wear leveling in a storage device according to an example embodiment.

FIG. 20 is a block diagram of an example of applying a storage device according to an example embodiment to a solid-state drive (SSD) system.

## DETAILED DESCRIPTION

In the following detailed description, some example embodiments of the inventive concepts have been shown and described, simply by way of illustration. As those skilled in the art would realize, the described example embodiments may be modified in various different ways, all without departing from the scope of the inventive concepts.

Accordingly, the drawings and description are to be regarded as illustrative in nature and not restrictive. Like reference numerals designate like elements throughout the specification. In a flowchart described with reference to a drawing, the order of operations may be changed, several operations may be merged, a certain operation may be divided, and a specific operation may not be performed.

In addition, expressions written in the singular may be interpreted as singular or plural, unless explicit expressions such as "one" or "single" are used. Terms containing ordinal numbers, such as first and second, may be used to describe various configurations elements, but constituent elements are not limited by these terms. These terms may be used for the purpose of distinguishing one constituent element from another constituent element.

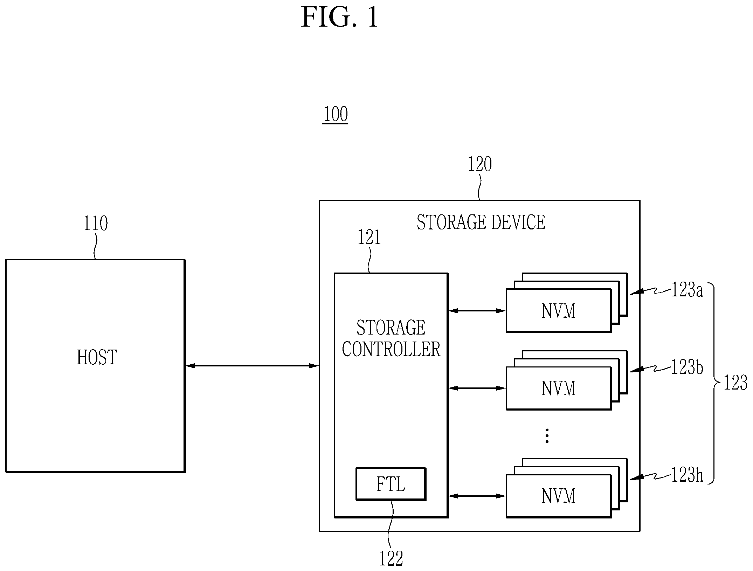

FIG. 1 is a block diagram of a storage system according to an example embodiment.

Referring to FIG. 1, a storage system 100 includes a host 110 and a storage device 120.

The host 110 controls the overall operation of the storage system 100. The host 110 may execute an operating system (OS). For example, an operating system executed by the host 110 may include a file system for file management and a device driver for controlling peripheral devices including the storage device 120 at the operating system level.

The host 110 may communicate with the storage device 120 through various interfaces. For example, the host 110 may communicate with the storage device 120 through various interfaces such as a universal serial bus (USB), a multimedia card (MMC), a PCI Express (PCI-E), an AT attachment (ATA), a serial AT attachment (SATA), a parallel AT attachment (PATA), a small computer system interface (SCSI), a serial attached SCSI (SAS), an enhanced small disk interface (ESDI), integrated drive electronics (IDE), a non-volatile memory express (NVMe), and the like. The host 110 may transmit a read request or write request to the storage device 120, and the storage device 120 may write data into the non-volatile memory 123 in response to the write request or read request, or may write data to the non-volatile memory 123 or read data from the non-volatile memory 123.

The host 110 may be implemented as an application processor (AP) or system-on-a-chip (SoC), but example embodiments are not limited thereto. In addition, for example, the host 110 may be implemented as an integrated circuit, a motherboard, or a database server, but example embodiments are not limited thereto.

The storage device 120 is accessed by the host 110. The storage device 120 may include a storage controller 121 and a plurality of non-volatile memories 123a, 123b, ..., and 123h. The storage device 120 may store data or process data in response to an instruction from the host 110. For example, the storage device 120 may be a solid state drive (SSD), a smart SSD, an embedded multimedia card (eMMC), an embedded universal flash storage (UFS) memory device, a UFS memory card, a compact flash (CF), a secure digital (SD), a micro-SD, a mini-SD, extreme Digital (xD), or a memory stick, but example embodiments are not limited thereto.

The storage controller 121 may control the operation of the storage device 120. For example, the storage controller 121 may control the operation of a plurality of non-volatile memories 123a, 123b, ..., and 123h based on a command, an address, and data received from the host 110.

The storage controller 121 may control the non-volatile memory 123 in response to a request received from the host 110. The requests may include commands, addresses, data, and the like. The storage controller 121 may write data into the non-volatile memory 123 or read data from the non-volatile memory 123 according to a command of the host 110.

The storage controller 121 may manage and/or control read and write operations of the non-volatile memory 123. In the non-volatile memory 123, a page is a unit of read and write operations, and a block is a unit of erase operations. Since the non-volatile memory 123 does not support overwrite operations, a process to copy all valid data in the block to which the page belongs to another empty block and erases the previous block is desired or required in order to modify data recorded in the page. Since this process involves a plurality of page copy (page read and write) and erase operation processes, overall performance of the non-volatile memory 123 may be reduced.

The storage controller 121 may include an FTL 122 that manages read and write operations of the non-volatile memory device 123. The FTL 122 may perform address mapping, garbage collection, wear leveling, and the like.

The FTL 122 may map logical addresses generated by a file system of the host 110 to physical addresses of the non-volatile memory device 123. The FTL 122 provides an interface between the file system of the host 110 and the non-volatile memory device 123 to hide the delete operation of the non-volatile memory device 123. For example, when the FTL 122 receives an overwrite request from the host 110, instead of overwriting the original page, the FTL 122 writes the corresponding data to an empty page, thereby reducing additional page copy and erase operations. The FTL 122 reduces unnecessary read, write, and erase operations due to overwriting, but may generate a large number of pages (e.g., invalid pages) that store data older than the latest data. In order to inhibit or prevent the storage space of the non-volatile memory device 123 from being wasted due to invalidated pages, the FTL 122 may perform garbage collection to periodically delete invalidated pages.

The FTL 122 may map logical addresses to physical addresses of the non-volatile memory 123 divided into a plurality of zones. The FTL 122 may determine one of the plurality of zones as a zone corresponding to a logical address, and map the logical address to a physical address within the determined zone.

In an example embodiment, the FTL 122 may determine any one of the plurality of zones as a zone corresponding to the logical address based on a value of the logical address. Specifically, the FTL 122 may determine one of the plurality of zones as a zone corresponding to a logical address based on a value of an arbitrary bit (e.g., MSB, LSB, etc.) of the logical address. For example, if the non-volatile memory 123 is divided into the first zone and the second zone, the first zone or the second zone may be determined as the zone corresponding to the logical address according to whether the MSB of the logical address is "1" or "0".

In an example embodiment, the FTL 122 may perform a hash operation on the logical address and determine one of the plurality of zones as a zone corresponding to the logical address based on a hash value of the hash operation. In some example embodiments, the FTL 122 may perform a hash operation on some bits of the logical address, and determine one of the plurality of zones as a zone corresponding to the logical address based on the hash value. For example, when the non-volatile memory 123 is divided into four zones and a 2-bit hash value is calculated from the logical address, one of the four zones according to the 2-bit hash value may be determined as a zone corresponding to the logical address.

In an example embodiment, the FTL 122 may determine any one of the plurality of zones as a zone corresponding to a logical address based on a machine learning model. A machine learning model may perform machine learning on write requests. The machine learning model may be used to determine any one of the plurality of zones as a zone corresponding to a logical address included in a write request. Various characteristics of the write request may be provided as input values to the machine learning model. For example, the characteristic or attribute of a write request may include information such as logical address, request size, continuity of logical addresses of adjacent write requests (e.g., workload), overwrite ratio, and the like. The machine learning model may use a variety of machine learning algorithms. For example, the machine learning model may use a variety of machine learning algorithms such as a linear regression algorithm, a support vector machine algorithm, a deep neural network algorithm, a deep stream algorithm, a K-average algorithm, a clustering algorithm, an autoencoder algorithm, a convolutional neural network algorithm, a Siamese network algorithm, and the like.

The FTL 122 may change a method of determining one of the plurality of zones as a zone corresponding to a logical address during operation of the storage device 120. For example, while determining a zone corresponding to a logical address using a hash operation, the FTL 122 may determine a zone corresponding to a logical address based on a machine learning model.

The FTL 122 may perform wear leveling such that blocks are uniformly or substantially uniformly used in order to inhibit or prevent excessive degradation of specific blocks in the non-volatile memory 123. The FTL 122 may balance erase counts (EC) of blocks (physical blocks). For example, the FTL 122 may map the logical address mapped to the physical address of a block with a high erase count to the physical address of a block with a low EC, and the logical address mapped to a block with a low EC to a physical address of a block with a high EC. Accordingly, the EC between blocks, that is, the usage frequency of blocks, can be equalized.

In an example embodiment, the FTL 122 may perform wear leveling between different zones. The FTL 122 may map a logical address mapped to a physical address of a block with a highest EC value included in a first zone to a physical address of a block with a lowest EC value included in a second zone, and a logical address mapped to a physical address of a block with the lowest EC included in the second zone to a physical address of a block with the highest EC included in the first zone. In some example embodiments, the FTL 122 may perform wear leveling with a super block unit, a plane unit, a bank unit, or a channel unit formed of several consecutive blocks.

The FTL 122 can store and update mapping information for converting logical addresses into physical addresses in an address mapping table. The FTL 122 may be variously implemented as software, hardware, or a combination thereof that performs address conversion using the address mapping table in order to process read and write instructions transmitted from the host 110.

The FTL 122 maps logical addresses to address mapping tables corresponding to each zone. That is, bits representing physical address can be reduced in the address mapping table. For example, when the non-volatile memory 123 is not divided into a plurality of zones, one physical address corresponding to one logical address can be represented by 10 bits, but when the non-volatile memory 123 is divided into two zones, one physical address corresponding to one logical address can be represented by 9 bits. Therefore, according to an example embodiment, the address mapping table may be stored using a smaller size memory.

The plurality of non-volatile memories 123a, 123b, ..., and 123h may store data. Each of the plurality of non-volatile memories 123a, 123b, ..., and 123h may include a memory cell array including non-volatile memory cells that can maintain stored data even though the power of the storage system 100 is cut off, and the memory cell array may be divided into a plurality of memory blocks. The plurality of memory blocks may have a 2-dimensional horizontal structure in which memory cells are disposed on the same plane (or layer) two-dimensionally, or a 3-dimensional vertical structure in which non-volatile memory cells are disposed in three dimensions. The memory cell may be a single-level cell (SLC) that stores one bit of data or a multilevel cell (MLC) that stores two or more bits of data. However, example embodiments are not limited thereto, and each memory cell may be a triple level cell (TLC) storing 3-bit data or a quadruple-level cell storing 4-bit data.

Each of the plurality of non-volatile memories 123a, 123b, ..., and 123h may include a plurality of dies or a plurality of chips each including a memory cell array. For example, the non-volatile memory 110 may include a plurality of chips, and each of the plurality of chips may include a plurality of dies. In an example embodiment, the plurality of non-volatile memories 123a, 123b, ..., 123h may also include a plurality of channels each including a plurality of chips. The plurality of non-volatile memories 123a, 123b, ..., and 123h may be connected to one channel, and the number of the plurality of non-volatile memories 123a, 123b, ..., and 123h connected to one channel may be defined as a bank (way) or bank.

Each of the plurality of non-volatile memories 123a, 123b, ..., and 123h may include a NAND flash memory. In another example embodiment, a plurality of non-volatile memories 123a, 123b, ..., and 123h may include an electrically erasable programmable read-only memory (EEPROM), a phase change random access memory (PRAM), a resistive RAM (ReRAM), a resistance random access memory (RRAM), a nano-floating gate memory (NFGM), a polymer random access memory (PoRAM), a magnetic random access memory (MRAM), a ferroelectric random access memory (FRAM), or a similar memory. Hereinafter, the plurality of non-volatile memories 123a, 123b, ..., and 123h will be described on the assumption that each is a NAND flash memory device.

In an example embodiment, each of the storage devices 120 may be a solid-state drive (SSD). In another example embodiment, each of the storage devices 120 may be a universal flash storage (UFS), a multi-media card (MMC), or an embedded MMC (eMMC). In another example embodiment, each of the storage devices 120 may be implemented in the form of a secure digital (SD) card, a micro SD card, a memory stick, a chip card, a universal serial bus (USB) card, a smart card, a compact flash (CF) card, or a similar card.

In an example embodiment, each of the storage device 120 may be connected with the host 110 through a block accessible interface including a serial advanced technology attachment (SATA) bus, a small computer small interface (SCSI) bus, a non-volatile memory express (NVMe) bus, a serial attached SCSI (SAS) bus, a UFS, eMMC, and the like, and may be accessed by the host 110 as a block unit through the block accessible interface.

In an example embodiment, the storage device 120 may be a random computing system such as a personal computer (PC), a server computer, a data center, a workstation, a digital television (digital TV), a set-top box, and the like. In another example embodiment, the storage device 120 may be a random mobile system such as a mobile phone, a smart phone, a tablet PC, a laptop computer, a personal digital assistant (PDA), a portable multimedia player (PMP), a digital camera, a camcorder, a portable game console, a music player, a video player, a navigation device, a wearable device, an Internet of Things (IoT) devices, an e-book, a virtual reality (VR) device, an augmented reality (AR) device, a drone, and the like.

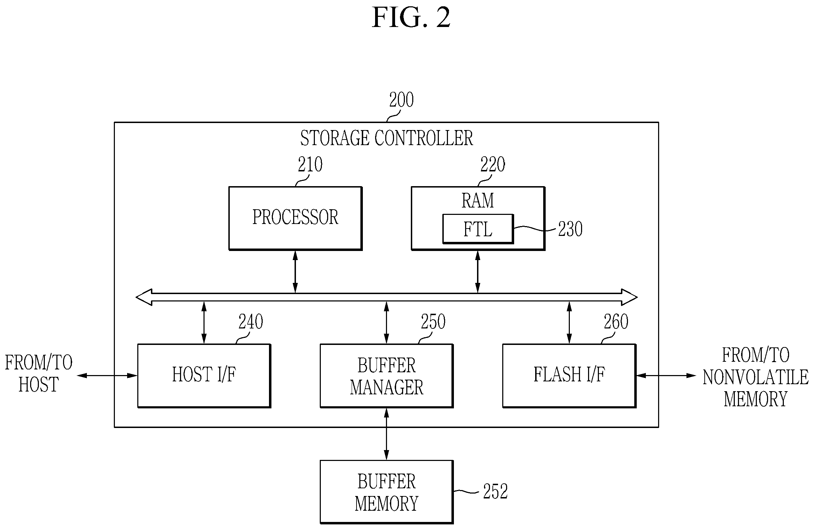

FIG. 2 is a block diagram of the storage controller according to an example embodiment.

Referring to FIG. 2, the storage controller 121 may access the non-volatile memory 123 (e.g., referring to FIG. 1) and a buffer memory 252. The storage controller 121 may perform writing, reading, and erasing according to a request of the host (e.g., 110 of FIG. 1). The storage controller 121 may write write-requested data into the non-volatile memory 123, and output read-requested data from the non-volatile memory 123.

The storage controller 121 may manage the non-volatile memory 123 using the buffer memory 252. For example, the storage controller 121 may temporarily store data to be written in the non-volatile memory 123 or data read from the non-volatile memory 123 in the buffer memory 252.

The storage controller 121 may include a processor 210, a random access memory (hereinafter, RAM) 220, a host interface circuit 240, a buffer manager 250, and a flash interface circuit 260.

The processor 210 may control overall operations of the storage controller 121 and perform a logical operation. The processor 210 may communicate with the host 110 through the host interface circuit 240, communicate with the non-volatile memory 123 through the flash interface circuit 260, and communicate with the buffer memory 252 through the buffer manager 250. The processor 210 may control the non-volatile memory 123 by using the RAM 220 as an operation memory, a cache memory, or a buffer memory, but example embodiments are not limited thereto.

The RAM 220 may be used as an operating memory, a cache memory, or a buffer memory of the processor 210. The RAM 220 may store codes and instructions executed by the processor 210. The RAM 220 may store data processed by the processor 210. The RAM 220 may be implemented as a static RAM (SRAM). In particular, the RAM 220 may store the FTL 230. The FTL 230 performs address mapping, garbage collection, and wear leveling performed for interfacing between the non-volatile memory 123 and the host 110.

The host interface circuit 240 is configured to communicate with an external host under the control of the processor 210. The host interface circuit 240 may be formed to communicate using at least one of various communication methods such as USB (Universal Serial Bus), SATA (Serial AT Attachment), SAS (Serial Attached SCSI), HSIC (High Speed Interchip), SCSI (Small Computer System Interface), PCI (Peripheral Component Interconnection), PCIe (PCI express), NVMe (Non-Volatile Memory Express), UFS (Universal Flash Storage), SD (Secure Digital), MMC (MultiMedia Card), eMMC (embedded MMC), DIMM (Dual In-line Memory Module), RDIMM (Registered DIMM), LRDIMM (Load Reduced DIMM), and the like.

The buffer manager 250 may control the buffer memory 252 under the control of the processor 210. The buffer manager 250 may control the buffer memory 252 to temporarily store data exchanged between the non-volatile memory 123 and the host (e.g., 110 in FIG. 1). The buffer memory 252 may store instruction words and data executed and processed by the storage controller 121. The buffer memory 252 may temporarily store data stored or desired to be stored in the non-volatile memory 123.

The buffer memory 252 may be implemented with volatile memory such as a dynamic random access memory (DRAM) or a static RAM (SRAM). However, the buffer memory 252 is not limited thereto, and the buffer memory 252 may be implemented as various types of non-volatile memories such as a resistive non-volatile memory such as a magnetic RAM (MRAM), a phase change RAM (PRAM), or a resistive RAM (ReRAM), a flash memory, or a nano-floating gate memory (NFGM), a polymer random access memory (PoRAM), or a ferroelectric random access memory (FRAM). In some example embodiments embodiment, the buffer memory 252 is provided outside the storage controller 121, but example embodiments are not limited thereto, and the buffer memory 252 may be provided inside the storage controller 121.

The flash interface circuit 260 may communicate with the non-volatile memory 123 under the control of the processor 210. The flash interface circuit 260 may communicate with the non-volatile memory 123 through a plurality of channels. Specifically, the flash interface circuit 260 may transmit and receive commands, addresses, and data to and from the non-volatile memory 123 through a plurality of channels. The non-volatile memory 123 may perform a write operation, a read operation, and an erase operation under the control of the storage controller 121. The non-volatile memory 123 may receive a write command, an address, and data from the storage controller 121, and write data into a storage space identified by the address. The non-volatile memory 123 may receive a read command and an address from the storage controller 121, read data from the storage space identified by the address, and output the read data to the storage controller 121. The non-volatile memory 123 may receive an erase command and an address from the storage controller 121 and erase data in the storage space identified by the address.

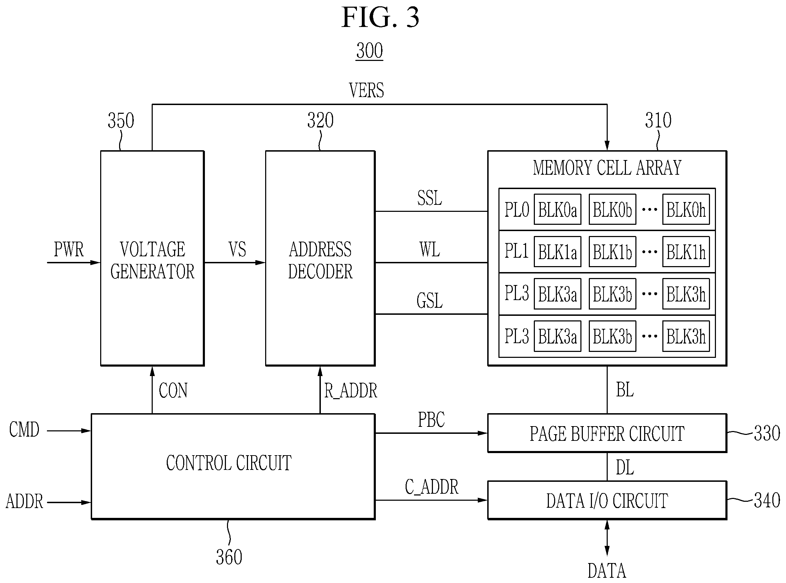

FIG. 3 is a block diagram of an example of a non-volatile memory included in a storage device according to an example embodiment.

Referring to FIG. 3, a non-volatile memory 300 includes a memory cell array 310, an address decoder 320, a page buffer circuit 330, a data input and output circuit 340, a voltage generator 350, and a control circuit 360. For example, the non-volatile memory 300 may be one of the non-volatile memories 123a, 123b, ..., and 123h of FIG. 1.

The memory cell array 310 is connected to the address decoder 320 through a plurality of string selection lines SSL, a plurality of word lines WL, and a plurality of ground selection lines GSL. In addition, the memory cell array 310 is connected to the page buffer circuit 330 through a plurality of bit lines BL. The memory cell array 310 may include a plurality of memory cells connected to the plurality of word lines WL and the plurality of bit lines BL. The memory cell array 310 may be divided into a plurality of planes PL0 to PL3 each including memory cells. Each of the plurality of planes PL0 to PL3 may include a plurality of memory blocks BLK0a, BLK0b, ..., BLK0h, BLK1a, BLK1b, ..., BLK1h, BLK2a, BLK2b, ..., BLK2h, BLK3a, BLK3b, ..., and BLK3h. In some example embodiments, a plurality of memory blocks (e.g., BLK0a, BLK0b, ..., and BLK0h) included in the same plane (e.g., PL0) may share the same bit line. In addition, each of the plurality of memory blocks BLK0a, BLK0b, ..., BLK0h, BLK1a, BLK1b, ..., BLK1h, BLK2a, BLK2b, ..., BLK2h, BLK3a, BLK3b, ..., and BLK3h) is divided into a plurality of pages. In some example embodiments, the memory cell array 310 may be formed in a 2D array structure or a 3D vertical array structure.

The control circuit 360 receives a command CMD and an address ADDR from the outside (e.g., the host 110 and/or the storage controller 121 in FIG. 1), and controls the erase loop, program loop, and read operation of non-volatile memory 300 based on the command CMD and the address ADDR. Here, the program loop may include a program operation and a program verify operation, and the erase loop may include an erase operation and an erase verify operation. Here, the read operation may include a normal read operation and a data recovery read operation.

For example, the control circuit 360 may generate control signals CON for controlling the voltage generator 350 and control signals PBC for controlling the page buffer circuit 330 based on the command CMD, and generate a row address R-ADDR and a column address C-ADDR based on the address ADDR. The control circuit 360 may provide the row address R-ADDR to the address decoder 320 and the column address C-ADDR to the data input and output circuit 340.

The address decoder 320 is connected to the memory cell array 310 through a plurality of string selection lines SSL, a plurality of word lines WL, and a plurality of ground selection lines GSL.

For example, during an erase/program/read operation, the address decoder 320 determines at least one of the plurality of word lines WL as a selected word line in response to the row address R-ADDR, and other word lines except for the selected word line among the plurality of word lines WL may be determined as non-selected word lines.

In addition, during the erase/program/read operation, the address decoder 320 may determine at least one of the plurality of string selection lines SSL as a selection string selection line and the remaining string selection lines as non-selection string selection lines in response to the row address R-ADDR.

In addition, during the erase/program/read operation, the address decoder 320 may determine at least one of a plurality of ground selection lines GSL as the selected ground selection line and the remaining ground selection lines as non-selection ground selection lines in response to the row address R-ADDR.

The voltage generator 350 may generate voltages VS necessary for the operation of the non-volatile memory 300 based on a power supply voltage PWR and the control signals CON. The voltages VS may be applied to the plurality of string selection lines SSL, the plurality of word lines WL, and the plurality of ground selection lines GSL through the address decoder 320. In addition, the voltage generator 350 may generate an erase voltage desired or required for an erase operation based on the power supply voltage PWR and the control signals CON. The erase voltage may be directly applied to the memory cell array 310 or may be applied through a bit line BL.

For example, during the erase operation, the voltage generator 350 may apply an erase voltage to a common source line and/or bit line BL of one memory block, and may apply an erase allowable voltage (e.g., ground voltage) through the address decoder 320 to all word lines of one memory block or word lines corresponding to some sub-blocks.

During the erase-verify operation, the voltage generator 350 may apply an erase-verify voltage to all word lines of one memory block or may apply the erase-verify voltage to word line units.

For example, during the program operation, the voltage generator 350 may apply a program voltage to the selected word line through the address decoder 320 and may apply a program prohibition voltage to the unselected word lines. During the program verification operation, the voltage generator 350 may apply a program verification voltage to the selected word line and may apply a verification pass voltage to the unselected word lines through the address decoder 320.

In addition, during a normal read operation, the voltage generator 350 may apply a read voltage to the selected word lines and may apply a read pass voltage to the unselected word lines through the address decoder 320. In addition, during a data recovery read operation, the voltage generator 350 may apply a read voltage to a word line adjacent to the selected word line through the address decoder 320 and may apply a recovery read voltage to the selected word line.

The page buffer circuit 330 may be connected to the memory cell array 310 through the plurality of bit lines BL. The page buffer circuit 330 may include a plurality of page buffers.

The page buffer circuit 330 may store write data to be programmed in the memory cell array 310 or store read data sensed from the memory cell array 310. That is, the page buffer circuit 330 may operate as a write driver or a sense amplifier according to an operation mode of the non-volatile memory 300.

The data input and output circuit 340 may be connected to the page buffer circuit 330 through data lines DL. The data input and output circuit 340 may provide write data DATA to the memory cell array 310 via the page buffer circuit 330 in response to the column address C-ADDR, or provide read data DATA output from the memory cell array 310 via the page buffer circuit 330 to the outside.

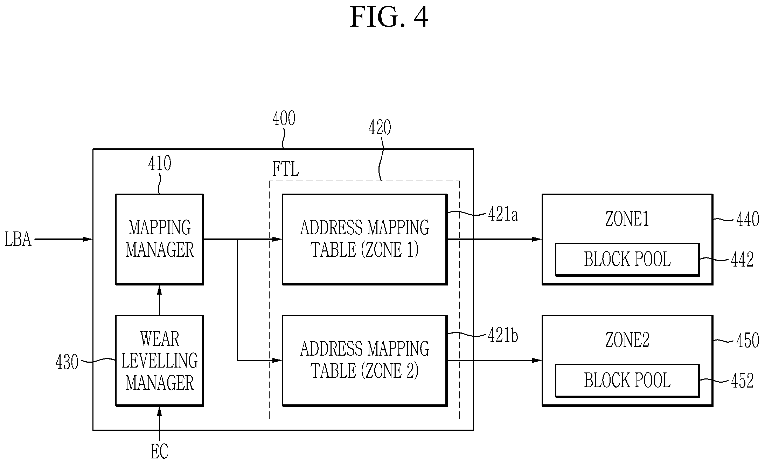

FIG. 4 is a block diagram of an FTL according to an example embodiment.

An FTL 400 may include a mapping manager 410, a mapping table 420, and a wear leveling manager 430.

The FTL 400 may use a mapping table 420 to convert logical addresses to physical addresses. The FTL 400 converts a logical block address LBA into a logical page number LPN. The address mapping table 420 may store mapping information between a logical page number LPN and a physical page number PPN. In an example embodiment, the FTL 400 may select one of the plurality of address mapping tables 421a and 421b corresponding to a plurality of zones based on input logical block addresses LBAs, and convert the logical block address LBA into a physical page number PPN corresponding to the logical block address LBA in the selected address mapping table 421a or 421b.

Each of the plurality of zones 440 and 450 may store block pools 442 and 452 including a list of blocks included in each of the plurality of zones 440 and 450. Information on blocks included in a first zone ZONE1 may be stored in the block pool 442, and information on blocks included in a second zone ZONE2 may be stored in the block pool 452.

The mapping manager 410 updates the address mapping table 420. In an example embodiment, the mapping manager 410 may change a physical address corresponding to a block by reflecting a result of wear leveling. The mapping manager 410 may replace blocks in different zones 440 and 450 with each other by reflecting the result of wear leveling. In some example embodiments, the mapping manager 410 may replace blocks in the first zone 440 with blocks in the second zone 450. The mapping manager 410 may replace one of a super block, a plane, a bank, and a channel including a block of the first zone 440 with a corresponding one of a super block, a plane, a bank, and a channel of the second zone 450. In some example embodiments, the mapping manager 410 may change physical page numbers between blocks replaced with each other between zones 440 and 450. The mapping manager 410 may update the block pools 442 and 452 included in each of the zones 440 and 450 by reflecting the result of the wear leveling operation.

In an example embodiment, the mapping manager 410 may change a physical address corresponding to a logical address by reflecting the result of the wear leveling operation. Specifically, the mapping manager 410 may change the physical address mapped to the logical address of the first zone 440 to the physical address mapped to the logical address of the second zone 450 by reflecting the result of the wear leveling operation.

In an example embodiment, the mapping manager 410 may change the zone corresponding to the logical address to another zone by reflecting the result of the wear leveling operation. The mapping manager 410 may change a physical address mapped to a logical address to a physical address of another zone by reflecting the result of the wear leveling operation. In some example embodiments, the mapping manager 410 may replace the logical address range of the first zone 440 with the logical address range of the second zone 450. The mapping manager 410 may change a plurality of logical address ranges by using a replacement table indicating whether a plurality of logical address ranges are replaced.

In addition, the mapping manager 410 may update the address mapping table 420 by reflecting a result of the garbage collection operation.

In an example embodiment, the mapping manager 410 may update the address mapping table 420 while data input and output operations with the host 110 are not performed. The mapping manager 410 may change a physical address corresponding to a block while data input and output operations with the host 110 are not performed. The mapping manager 410 may change a physical address corresponding to a logical address while data input and output operations with the host 110 are not performed. The mapping manager 410 may perform a physical address range replacement operation for at least one of a plurality of logical address ranges while data input and output operations with the host 110 are not performed. The mapping manager 410 may change a zone corresponding to a logical address to another zone while data input and output operations with the host 110 are not performed.

The wear leveling manager 430 may manage wear leveling information for blocks of a non-volatile memory. For example, when a wear leveling condition is satisfied, the wear leveling manager 430 may scan EC information of all blocks or some blocks sequentially or according to a prescribed method. When the scan result and the block where data is to be stored reach a large EC value, the physical address of the block may be changed such that data can be written to a block (e.g., free block) with a relatively small EC value (e.g., a low EC value below a specified threshold).

In an example embodiment, the wear leveling manager 430 may replace a physical address of a block having the highest EC value with a physical address of a block having the lowest EC value included in a zone different from the block having the highest EC value, based on EC information. The wear leveling manager 430 may replace a physical address of one of a super block, a plane, a bank, and a channel including the block with the largest EC value and a physical address of one of a super block, a plane, a bank, and a channel including the block with the lowest EC value.

In an example embodiment, the wear leveling manager 430 may determine a first logical address corresponding to a block having the highest EC value based on EC information. The wear leveling manager 430 may determine a second logical address corresponding to a block having the highest EC value and a block having the lowest EC value included in a zone different from the block having the highest EC value based on EC information. The wear leveling manager 430 may replace the first logical address and the second logical address with each other.

In an example embodiment, the wear leveling manager 430 may change a logical address corresponding to a block having the highest EC value to another zone based on EC information. The wear leveling manager 430 may include a logical address corresponding to a block having the highest EC value and a physical address mapped thereto in another zone.

The wear leveling manager 430 may provide information about the physical address to be changed to the mapping manager 410. The mapping manager 410 may update the address mapping table 420 according to information from the wear leveling manager 430.

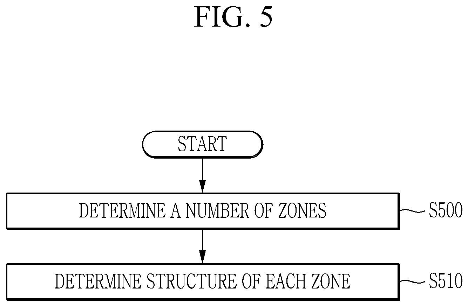

Hereinafter, referring to FIG. 5 to FIG. 8, an operation for setting a plurality of zones will be described.

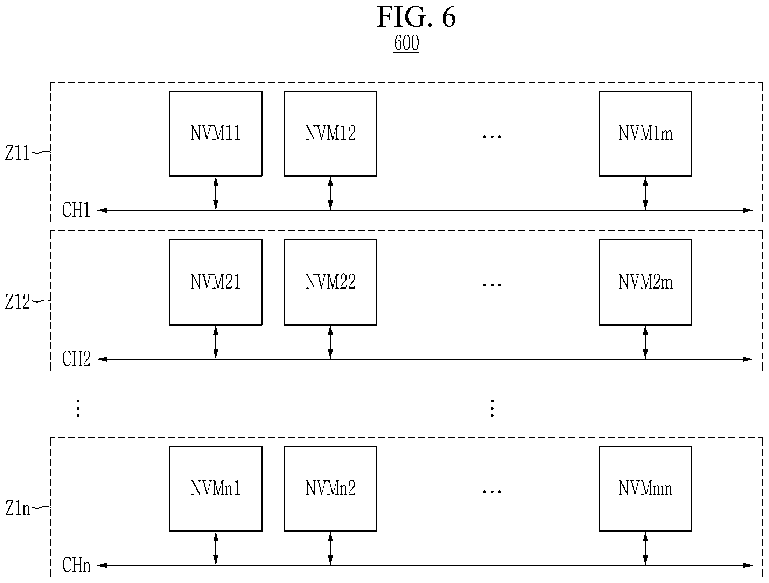

FIG. 5 is a flowchart of an operation of setting a zone of an operation method of the storage device according to an example embodiment, and FIG. 6 to FIG. 8 are provided for explaining an operation of setting a zone in the storage device according to an example embodiment.

Referring to FIG. 5, the storage controller 200 determines the number of zones in the non-volatile memory (S500). The storage controller 200 may determine the number of zones from the target capacity ratio of the RAM 220 to be reduced and the number of bits of the number of physical pages to represent the maximum number of physical pages included in the non-volatile memory. Equation 1 below shows an example method for calculating the number of bits in the number of physical pages.

(Equation 1)

$$PPN_{max} = \log \frac{SSD_{size}}{Page_{size}}$$

In Equation 1, $PPN_{max}$ may be the number of bits of the number of physical pages to express a maximum number of physical pages included in the non-volatile memory, $SSD_{size}$ may be capacity of the storage controller, and $Page_{size}$ may be a size of the physical pages. For example, when $SSD_{size}$ is 4 TB and $Page_{size}$ is 4 KB, $PPN_{max}$ may be calculated as $\log(2^{30})$, that is, 30. When the maximum number of physical pages is determined, the storage controller 200 may determine the number of zones based on Equation 2 below according to a target capacity ratio of the RAM 220 to be reduced.

(Equation 2)

$$N_{VMD} = 2^{\lceil PPN_{max} \times R \rceil}$$

For example, since $PPN_{max}$ is 30 and the target capacity ratio to be reduced is 5 %, that is, 0.05, the value of $2^{\lceil 30 \times 0.05 \rceil}$ is 4, $N_{VMD}$, which is the lowest value equal to or larger than this, is 4. This means that when the number of zones is four or more, the capacity of the RAM 220 can be reduced by a target amount. Accordingly, the storage controller 200 may determine the number of zones that are easy to manage while satisfying Equation 2 above.

The storage controller 200 determines the structure of each zone based on the determined number of zones (S510).

When the number of zones is less than or equal to the number of channels, the storage controller 200 may group at least one channel in one zone. Referring to FIG. 6, the non-volatile memory 600 may include a plurality of memories NVM11 to NVMnm connected to a plurality of channels CH1, CH2, ..., and CHn (where m>n, and m and n are positive integers). A plurality of memories NVM11, NVM12, ..., and NVM1m may be connected to a channel CH1, a plurality of memories NVM21, NVM22, ..., and NVM2m may be connected to a channel CH2, and a plurality of memories NVMn1, NVMn2, ..., and NVMnm may be connected to a channel CHn. When the number of zones is less than or equal to the number of channels, the storage controller 200 may determine one zone by grouping the channels. For example, when the number of channels is 16 and the number of zones is 16 or less, the storage controller 200 may determine the structure of zones in channel units. Zone Z11 may include a plurality of memories NVM11, NVM12, ..., and NVM1m connected to channel CH1, and zone Z12 may include a plurality of memories NVM21, NVM22, ..., and NVM2m connected to channel CH2, and the zone Z1n may include a plurality of memories NVMn1, NVMn2, ..., and NVMnm connected to the channel CHn.

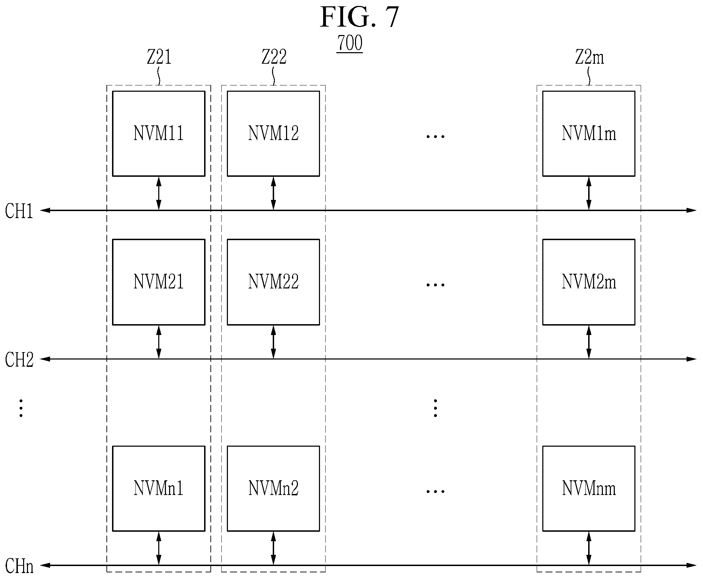

When the number of zones is greater than the number of channels and less than the number of banks, the storage controller 200 may group at least one bank in one zone. Referring to FIG. 7, a non-volatile memory 700 may include a plurality of memories NVM11 to NVMnm connected to a plurality of channels CH1, CH2, ..., and CHn. A plurality of memories NVM11, NVM21, ..., and NVMn1 may form one bank, a plurality of memories NVM12, NVM22, ..., and NVMn2 may form one bank, and a plurality of memories NVM1m, NVM2m, ..., and NVMnm may form one bank. When the number of zones is greater than the number of channels and less than or equal to the number of banks, the storage controller 200 may group the banks to determine one zone. For example, when the number of channels is 16, the number of banks is 32, and the number of zones is greater than or equal to 17 and less than or equal to 32, the storage controller 200 may determine a zone structure in terms of bank units. Zone Z21 may include a plurality of memories NVM11 to NVMn1 forming one way, and zone Z22 may include a plurality of memories NVM12, NVM22, ..., and NVMn2 forming one way, and zone Z2m may include a plurality of memories NVM1m, NVM2m, ..., and NVMnm forming one way.

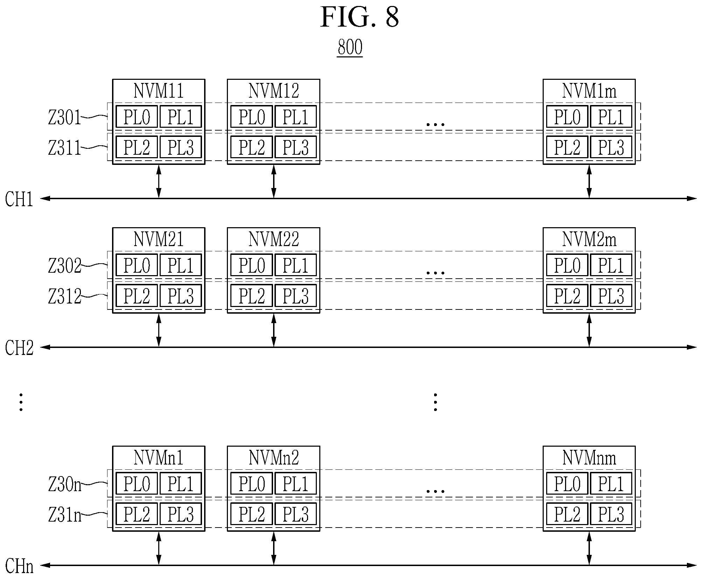

In addition, the storage controller 200 may organize each zone into a plane, a super block, or a block unit according to the number of zones. When divided into many zones, the storage controller 200 may organize each zone into smaller units. Referring to FIG. 8, a non-volatile memory 800 may include a plurality of memories NVM11 to NVMnm connected to a plurality of channels CH1, CH2, ..., and CHn. Each of the plurality of memories NVM11 to NVMnm may include a plurality of planes PL0, PL1, PL2, and PL3. The storage controller 200 may determine one zone by grouping some planes in a memory connected to the same channel. For example, zone Z301 may include planes PL0 and PL1 of a plurality of memories NVM11, NVM12, ..., and NVM1m connected to channel CH1, and zone Z311 may include planes PL2 and PL3 of a plurality of memories NVM11, NVM12, ..., and NVM1m connected to channel CH1. Similarly, the zones Z302, Z312, ..., Z30n, and Z31n may also include planes PL0, PL1, PL2, and PL3 of a plurality of memories NVM21, ..., NVM2m, NVMn1, ..., NVMnm connected to each of the channels CH2 and CHn.

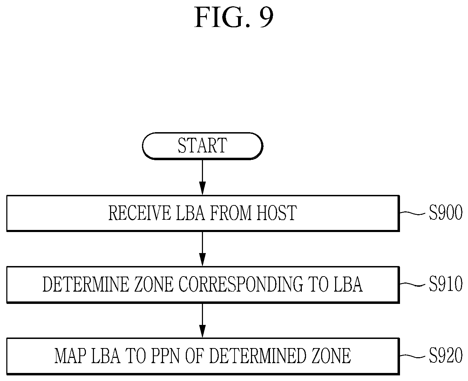

Next, referring to FIG. 9 to FIG. 12, an operation of determining a zone of a logical address in a storage device according to an example embodiment will be described.

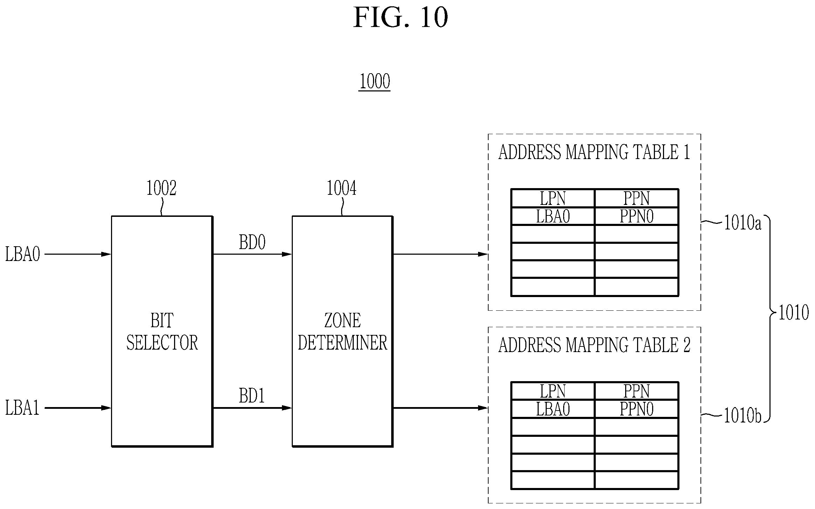

FIG. 9 is a flowchart of an operation of mapping a logical address of an operation method of a storage device to a physical address according to an example embodiment, and FIG. 10 to FIG. 12 are provided for explaining an operation of mapping a logical address to a physical address in a storage device according to an example embodiment.

Referring to FIG. 9, a storage controller 200 receives a logical block address LBA from a host (S900). The host may provide data DATA and the logical block address LBA of the data DATA to the storage controller 200.

The storage controller 200 determines a zone corresponding to the logical block address LBA (S910). The storage controller 200 maps logical block addresses to physical addresses within the determined zone (S920).

In an example embodiment, the storage controller 200 may determine one of a plurality of zones as a zone corresponding to the logical address based on a value of the logical address. Referring to FIG. 10, an FTL 1000 may include a bit selector 1002, a zone determiner 1004, and an address mapping table 1010.

The bit selector 1002 may select arbitrary bits BD0 and BD1 of input logical block addresses LBAO and LBA1. The bit selector 1002 may select and output the MSB of logical block addresses LBAO and LBA1, or select and output the LSB. In addition, the bit selector 1002 may select and output a plurality of bits of the logical block addresses LBAO and LBA1.

The zone determiner 1004 may determine a zone corresponding to the logical block addresses LBAO and LBA1 among a plurality of zones according to input bit values. For example, the zone determiner 1004 may determine a zone corresponding to the logical block address LBAO as a first zone based on a value of bit BD0, and determine a zone corresponding to a logical block address LBA1 as a second zone based on a value of bit BD1.

The FTL 1000 may convert the logical block addresses LBAO and LBA1 into a physical page number PPNO corresponding to the logical block addresses LBAO and LBA1 based on address mapping tables 1010a and 1010b corresponding to each zone.

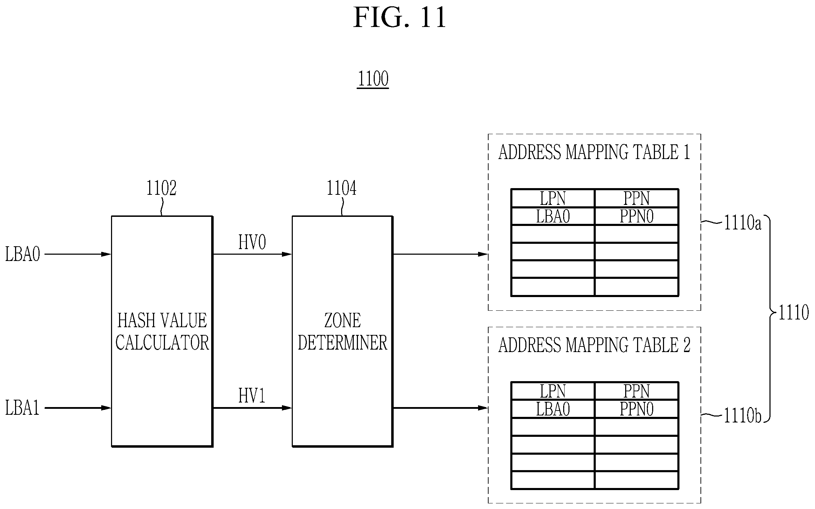

In an example embodiment, the storage controller 200 may perform a hash operation on the logical address and determine one of a plurality of zones as a zone corresponding to the logical address based on a hash value of the hash operation. Referring to FIG. 11, the FTL 1100 may include a hash value calculator 1102, a zone determiner 1104, and an address mapping table 1110.

The hash value calculator 1102 may perform a hash operation on input logical block addresses LBAO and LBA1, and output hash values HV0 and HV1 of the logical block addresses LBAO and LBA1. In some example embodiments, the hash value calculator 1102 may apply different hash functions depending on values of logical block addresses LBAO and LBA1. According to different hash functions, different hash values may be output even by the same logical block address.

The zone determiner 1104 may determine a zone corresponding to logical block addresses LBAO and LBA1 among a plurality of zones according to input.

For example, the zone determiner 1104 determines a zone corresponding to the logical block address LBAO as a first zone based on the hash value HV0, and determines a zone corresponding to the logical block address LBA1 as a second zone based on the hash value HV1.

The FTL 1100 may convert logical block addresses LBAO and LBA1 into a physical page number PPNO corresponding to the logical block addresses LBAO and LBA1 based on address mapping tables 1110a and 1110b corresponding to each zone.

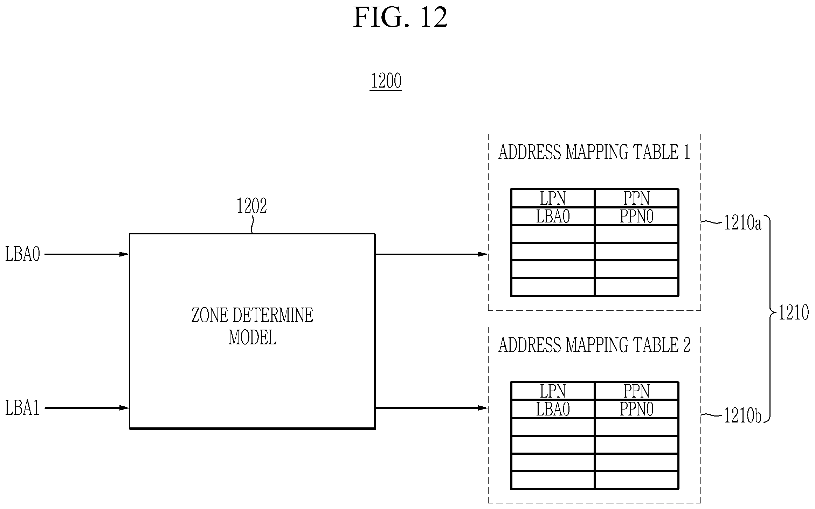

In an example embodiment, the storage controller 200 may determine one of a plurality of zones as a zone corresponding to a logical address based on a machine learning model. Referring to FIG. 12, an FTL 1200 may include a zone determination model 1202 and an address mapping table 1210.

The zone determination model 1202 may determine one of a plurality of zones as a zone corresponding to logical block addresses LBAO and LBA1. The zone determination model 1202 may be a model that performs machine learning on a write request, and may be a machine learning model trained by providing various characteristics of a write request as input values of various machine learning algorithms.

The FTL 1200 may convert logical block addresses LBAO and LBA1 into a physical page number PPNO corresponding to the logical block addresses LBAO and LBA1 based on address mapping tables 1210a and 1210b corresponding to each zone.

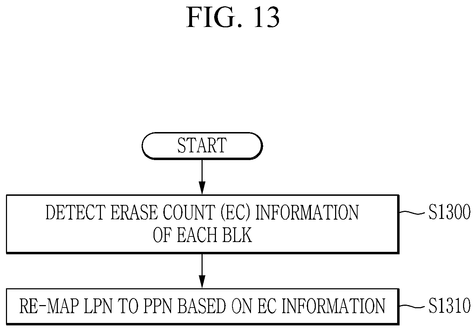

Next, referring to FIG. 13 to FIG. 19, a wear leveling operation of the storage device according to an example embodiment will be described.

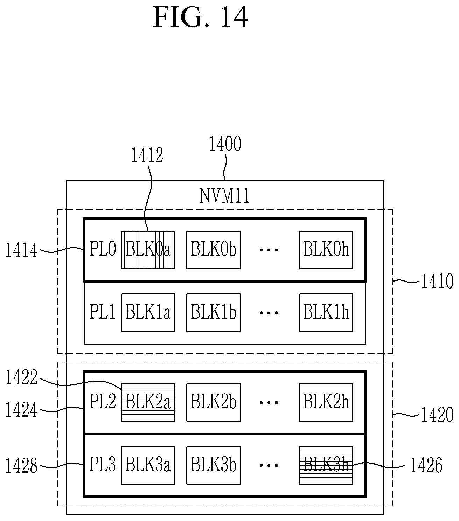

FIG. 13 is a flowchart of wear leveling of an operation method of a storage device according to an example embodiment, and FIG. 14 to FIG. 19 are provided for explaining wear leveling in a storage device according to an example embodiment.

Referring to FIG. 13, the storage controller 200 detects EC information of blocks included in each zone (S1300). The storage controller 200 may scan EC information of all blocks or some blocks of the non-volatile memory. When the wear leveling condition is satisfied, the storage controller 200 may scan EC information of all blocks or some blocks sequentially or according to a prescribed method.

The storage controller 200 remaps the logical address and the physical address based on the EC information (S1310). The storage controller 200 may replace a block having the highest EC value and a block having the lowest EC value included in a zone different from the block having the highest EC value based on the EC information.

The storage controller 200 may replace a block with the lowest EC value included in a different zone in the same non-volatile memory with a zone including a block with the highest EC value. Referring to FIG. 14, a non-volatile memory (NVM11) 1400 includes a plurality of planes PL0, PL1, PL2, and PL3, and each of the plurality of planes PL0, PL1, PL2, and PL3 may include a plurality of memory blocks BLK0a, BLK0b, ..., BLK0h, BLK1a, BLK1b, ..., BLK1h, BLK2a, BLK2b, ..., BLK2h, BLK3a, BLK3b, ..., and BLK3h. A first zone 1410 may include the planes PL0 and PL1, and a second zone 1420 may include the planes PL2 and PL3. In some example embodiments, the storage controller 200 may replace a block (BLK0a) 1412 with a high EC value included in the first zone 1410 with a block (BLK2a) 1422 or a block (BLK3h) 1426 with a low EC value in the second zone 1420. In some example embodiments, the storage controller 200 may replace a plane (PLO) 1414 including a block (BLK0a) 1412 having a high EC value included in the first zone 1410 with a plane (PL2) 1424 including a block (BLK2a) 1422 having a low EC value in the second zone 1420 or a plane (PL3) including a block (BLK3h) 1426 with a low EC value.

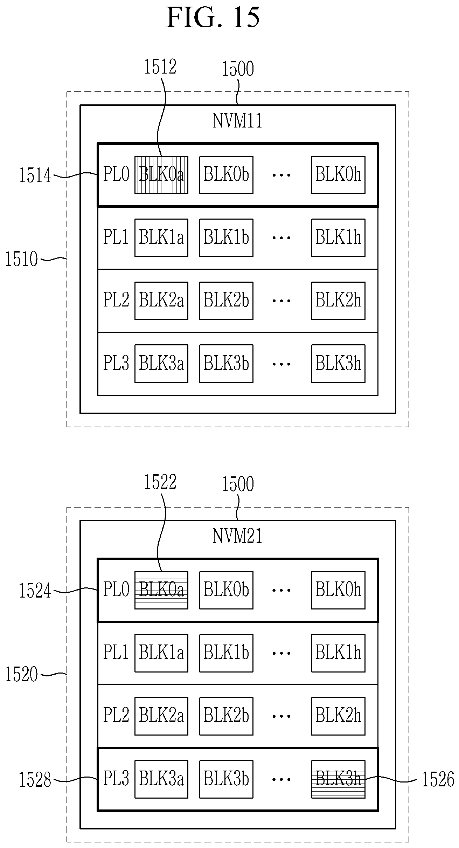

The storage controller 200 may replace blocks with the lowest EC value included in different zones in a different non-volatile memory connected to the same channel as the zone including the block with the highest EC value. Referring to FIG. 15, a first zone 1510 may include a non-volatile memory (NVM11) 1500, and a second zone 1520 may include a non-volatile memory (NVM21) 1500. In some example embodiments, the storage controller 200 may replace a block (BLK0a) 1512 with a high EC value included in the first zone 1510 with a block (BLK0a) 1522 with a low EC value or a block (BLK3h) 1526 with a low EC value in the second zone 1520. The storage controller 200 may replace the block (BLK0a) 1512 with a physical address of the block (BLK0a) 1512 in the first zone 1510 and the same physical address as the block (BLK0a) 1522 in the second zone 1520. In some example embodiments, the storage controller 200 may replace a plane (PLO) 1514 including the block (BLK0a) 1512 with a high EC value included in the first zone 1510 with a plane (PLO) 1524 including the block (BLK0a) 1522 with a low EC value in the second zone 1520 or a plane (PL3) 1528 including the block (BLK3h) 1526 a low EC value.

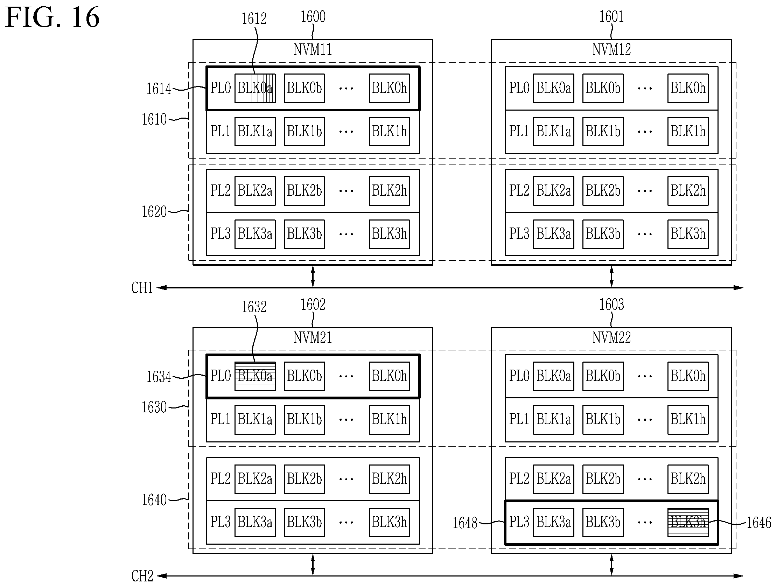

The storage controller 200 may replace blocks with the lowest EC value included in different zones in the non-volatile memory connected to a channel different from the zone including the block with the highest EC value. Referring to FIG. 16, a first zone 1610 may include planes PL0 and PL1 of a non-volatile memory (NVM11) 1600 and planes PL0 and PL1 of a non-volatile memory (NVM12), a second zone 1620 may include planes PL2 and PL3 of a non-volatile memory (NVM11) and planes PL2 and PL3 of a non-volatile memory (NVM12) 1601, a third zone 1630 may include planes PL0 and PL1 of a non-volatile memory (NVM21) 1602 and planes PL0 and PL1 of a non-volatile memory (NVM22) 1603, and a fourth zone 1640 may include planes PL2 and PL3 of a non-volatile memory (NVM21) 1602 and planes PL2 and PL3 of a non-volatile memory (NVM22) 1603. In some example embodiments, the storage controller 200 may replace a block (BLK0a) 1612 with a high EC value included in the first zone 1610 with a block with a low EC value in the third zone 1630 of a different non-volatile memory (NVM21) 1602 connected to a different channel CH2 or a block (BLK3h) 1646 with a low EC value in the fourth zone 1640 of a different non-volatile memories (NVM22) 1603 connected to a different channel CH2. The storage controller 200 may replace a block (BLK0a) 1612 with a physical address of a block (BLK0a) 1632 of the third zone 1630 having the same physical address as the physical address of the block (BLK0a) 1612. In some example embodiments, the storage controller 200 may replace a plane (PLO) 1614 including a block (BLK0a) 1612 having a high EC value included in the first zone 1610 with a plane (PLO) 1634 including a block BLK0a with a low EC value in the third zone 1630 or a plane (PL3) 1648 including a block BLK3h with a low EC value in the fourth zone 1640.

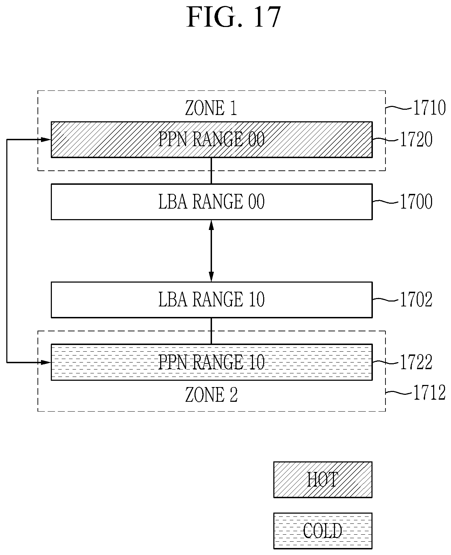

The storage controller 200 may determine a first logical address corresponding to a block having the highest EC value and determine a second logical address corresponding to a block having the lowest EC value included in a zone different from the block having the highest EC value based on the EC information, and may replace a physical address corresponding to the first logical address with a physical address corresponding to the second logical address. Referring to FIG. 17, a physical address range 1720 and a physical address range 1722 may be included in different zones 1710 and 1712. An LBA range 1700 may be mapped to a physical address range 1720 having a high EC value, and an LBA range 1702 may be mapped to a physical address range 1722 having a low EC value. The storage controller 200 may replace the LBA range 1700 having a high EC value with the LBA range 1702 having a low EC value. The LBA range 1700 may be mapped to a physical address range 1722 having a low EC value of the second zone 1712, and the LBA range 1702 may be mapped to a physical address range 1720 of the first zone 1710 having a high EC value.

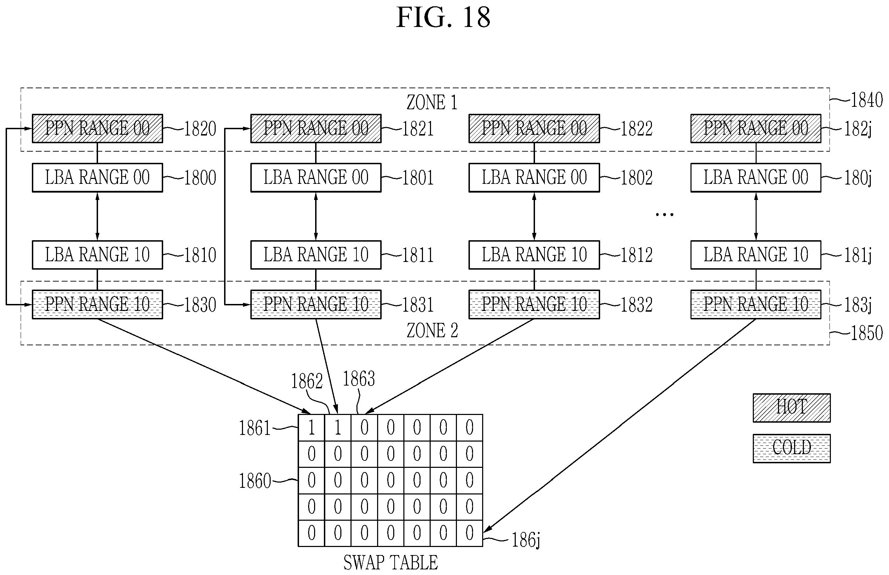

The storage controller 200 may perform a physical address range replacement operation for a plurality of logical address ranges using a replacement table. The storage controller 200 may sequentially perform a physical address range replacement operation for a plurality of logical address ranges while data input and output operations are not performed. Referring to FIG. 18, a plurality of physical address ranges 1820 to 182j and physical address ranges 1830 to 183j may be included in different zones 1840 and 1850. LBA ranges 1800 to 180j are mapped to the physical address ranges 1820 to 182j having a relatively high EC value (e.g., a high EC value above a specified threshold), and LBA ranges 1810 to 181j are mapped to physical address ranges 1830 to 183j having a relatively low EC value (e.g., a low EC value below a specified threshold). The storage controller 200 may replace the LBA ranges 1800 to 180j having a high EC value with the LBA ranges 1810 to 181j having a low EC value. In a replacement table 1860 to 186j, bits corresponding to LBA ranges 1802, 1812, 180j, and 181j for which replacement is not completed may have a logical value of "0". The storage controller 200 may change bits corresponding to the replacement LBA ranges 1800, 1810, 1801, and 1811 to a logic value of "1". The LBA ranges 1800 to 180j are mapped to physical address ranges 1830 to 183j having a low EC value, and the LBA ranges 1810 to 181j are mapped to the physical address ranges 1820 to 182j having a high EC value.

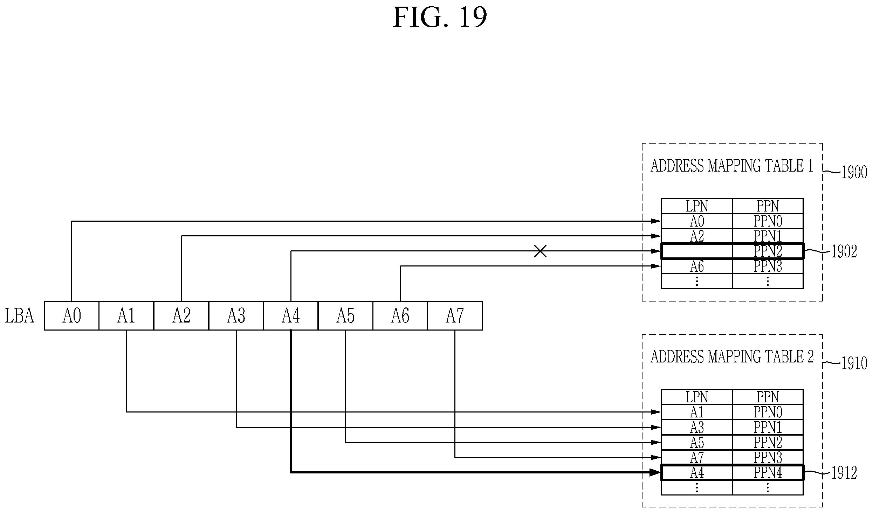

The storage controller 200 may change a logical address corresponding to a block having the highest EC value to another zone based on the EC information. The storage controller 200 may include a logical address corresponding to a block having the highest EC value in another zone having a low EC value of blocks such that EC values of blocks included in a plurality of zones become uniform. Referring to FIG. 19, in address mapping tables 1900 and 1910, each of a plurality of logical addresses A0 to A7 may be mapped to a physical address of a corresponding zone. When an EC value of a block corresponding to the physical address PPN2 of the first zone is the highest, the storage controller 200 may map the logical address A4 mapped to the physical address PPN2 (1902) of the first zone to a physical address PPN4 (1912) of a block of another zone.

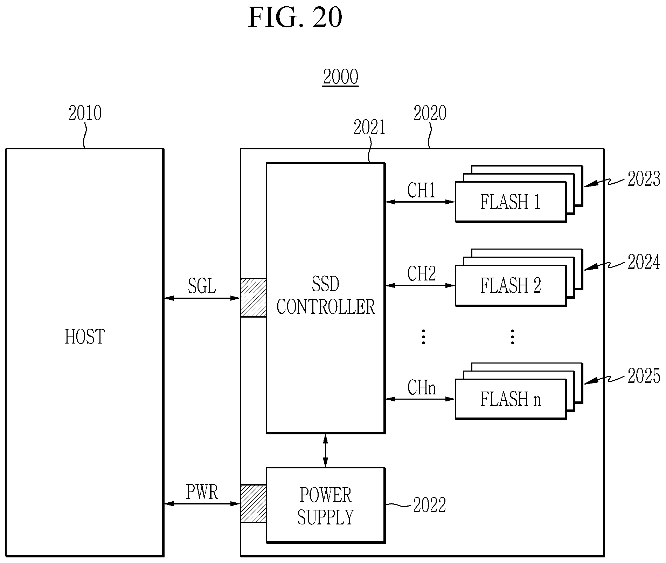

Referring to FIG. 20, an SSD system 2000 may include a host 2010 and an SSD 2020.

The SSD 2020 may be implemented using the example embodiments described with reference to FIG. 1 to FIG. 19. The SSD 2020 may transmit and receive signals with the host 2010 through a signal connector SGL and receive power input through a power connector PWR.

The SSD 2020 may include a controller 2021, an auxiliary power supply 2022, and a plurality of memory systems 2023, 2024, and 2025. Each of the plurality of memory systems 2023, 2024, and 2025 may include at least one flash memory device as a storage device. In addition, each flash memory device may include at least one die DIE, and at least one block may be disposed in each die DIE.

The controller 2021 may communicate with the plurality of memory systems 2023, 2024, and 2025 through a plurality of channels Ch1 to Chn. The controller 2021 divides the plurality of memory systems 2023, 2024, and 2025 into a plurality of zones, determines a zone corresponding to a logical address based on the logical address input from the host 2010, and matches the physical address and logical address of the determined zone. The controller 2021 may remap logical addresses and physical addresses between different zones based on EC values of blocks of the plurality of memory systems 2023, 2024, and 2025.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FGPA), a System-on-Chip (SoC), a programmable logic unit, a microprocessor, application-specific integrated circuit (ASIC), etc.

While embodiments of the invention have been described with reference to specific examples, the skilled person will understand that modifications may be made without departing from the scope of the invention as defined by the claims.

**Claims**

1. A storage device comprising:

   a non-volatile memory (123) including a plurality of blocks; and
   a storage controller (121) configured to:

   divide the plurality of blocks into a plurality of zones (440, 450), and provide a plurality of address mapping tables that correspond to the plurality of zones and store mapping information of a logical address and a physical address;
   determine a first zone (440) of the plurality of zones (440, 450) corresponding to a logical address received from a host (110), based on a value of the logical address,
   map the logical address to a physical address corresponding to a first block in the first zone (440), and replace at least one of the logical address or the first block with a logical address or a block of a second zone (450) of the plurality of zones (440, 450), the second zone (450) different from the first zone (440),
   wherein the storage controller comprises a Flash Translation Layer, FTL, (122) configured to map logical addresses to address mapping tables corresponding to each zone, so that bits representing physical addresses can be reduced in the address mapping tables.

2. The storage device of claim 1, wherein the storage controller (121) is configured to replace the first block with a second block having a lowest erase count value of the second zone (450).

3. The storage device of claim 2, wherein the physical address of the first block and the physical address of the second block are same.

4. The storage device of any one of claims 1, 2 or 3, wherein the storage controller (121) is configured to replace one of a super block, a plane, a bank, and a channel including the first block, with a corresponding one of a super block, a plane, a bank, and a channel including a second block, the second block having a lowest erase count value of the second zone (450).

5. The storage device of any one of claims 1 to 4, wherein the storage controller (121) is configured to:

   determine a first logical address corresponding to the first block,
   determine a second logical address corresponding to a second block having a lowest erase count value, and
   replace the first logical address with the second logical address.

6. The storage device of any one of claims 1 to 5, wherein the storage controller (121) is configured to:

   determine a plurality of first logical address ranges corresponding to blocks having a high erase count value above a specified high value threshold in the first zone (440),
   determine a plurality of second logical address ranges corresponding to blocks having a low erase count value below a specified low value threshold in the second zone (450), and
   replace the plurality of first logical address ranges and the plurality of second logical address ranges with each other using a replacement table indicating whether each of the plurality of first logical address ranges is replaced.

7. The storage device of any one of claims 1 to 6, wherein the storage controller (121) is configured to map the logical address to a physical address of an address mapping table corresponding to the second zone (450) such that erase count values of blocks included in the first zone (440) and the second zone (450) are uniform.

8. The storage device of any one of claims 1 to 7, wherein the storage controller (121) is configured to determine the first zone (440) based on an arbitrary bit value of the logical address.

9. The storage device of any one of claims 1 to 8, wherein the storage controller (121) is configured to perform a hash operation on the logical address and determine the first zone (440) based on a hash value of the logical address.

10. The storage device of claim any one of 1 to 9, wherein the storage controller (121) is configured to determine the first zone (440) by inputting the logical address to a trained machine learning model with a characteristic of a write request input from the host (110).

11. An operation method of a storage device (120), comprising:

    dividing a plurality of blocks included in a non-volatile memory (123) into a plurality of zones (440, 450);
    providing a plurality of address mapping tables that correspond to the plurality of zones and store mapping information of a logical address and a physical address;
    receiving a logical address from a host (110);
    determining a first zone (440) of the plurality of zones (440, 450) corresponding to the logical address, based on the logical address;
    mapping the logical address to a physical address corresponding to a first block of the first zone (440);
    updating a mapping table of the first zone (440) by replacing at least one of the logical address or the first block with a logical address or block of a second zone (450) of the plurality of zones (440, 450), based on an erase count value of the first block, the second zone (450) different from the first zone (440); and
    mapping, by a Flash Translation Layer, FTL, (122) of the storage device, logical addresses to address mapping tables corresponding to each zone, so that bits representing physical addresses can be reduced in the address mapping tables.

12. The operation method of the storage device of claim 11, wherein the replacing comprises replacing the first block with a second block having a lowest erase count value of the second zone (450).

13. The operation method of the storage device of claim 11 or 12, wherein the determining a first zone (440) of the plurality of zones (440, 450) corresponding to the logical address comprises:

    determining the first zone (440) based on a random bit value of the logical address;
    performing a hash operation on the logical address and determining the first zone (440) based on a hash value of the logical address; or
    determining the first zone (440) by inputting the logical address to a trained machine learning model with a characteristic of a write request input from the host (110).

**Patentansprüche**

1. Speichervorrichtung, umfassend:

    einen nichtflüchtigen Speicher (123), der eine Vielzahl von Blöcken einschließt; und
    einen Speichercontroller (121), welcher konfiguriert ist, zum:

    Unterteilen der Vielzahl von Blöcken in eine Vielzahl von Zonen (440, 450) und Bereitstellen einer Vielzahl von Adresszuordnungstabellen, die der Vielzahl von Zonen entsprechen und Zuordnungsinformationen einer logischen und einer physischen Adresse speichern;
    Bestimmen, anhand eines Wertes der logischen Adresse, einer erste Zone (440) aus der Vielzahl von Zonen (440, 450), die einer von einem Host (110) empfangenen logischen Adresse entspricht, Zuordnen der logischen Adresse einer physischen Adresse, die einem ersten Block in der ersten Zone (440) entspricht, und

Ersetzen mindestens einer der logischen Adressen oder des ersten Blocks durch eine logische Adresse oder einen Block einer zweiten Zone (450) der Vielzahl von Zonen (440, 450), wobei die zweite Zone (450) sich von der ersten Zone (440) unterscheidet,

wobei der Speichercontroller eine Flash-Translation-Schicht (FTL) (122) umfasst, die so konfiguriert ist, dass sie logische Adressen Adresszuordnungstabellen zuordnet, die den einzelnen Zonen entsprechen, sodass die Bits, die physische Adressen darstellen, in den Adresszuordnungstabellen reduziert werden können.

2. Speichervorrichtung nach Anspruch 1, wobei der Speichercontroller (121) so konfiguriert ist, dass er den ersten Block durch einen zweiten Block mit dem niedrigsten Löschzählerwert der zweiten Zone (450) ersetzt.

3. Speichervorrichtung nach Anspruch 2, wobei die physische Adresse des ersten Blocks und die physische Adresse des zweiten Blocks gleich sind.

4. Speichervorrichtung nach einem der Ansprüche 1, 2 oder 3, wobei der Speichercontroller (121) so konfiguriert ist, dass er einen von einem Superblock, einer Ebene, einer Bank oder einem Kanal, der den ersten Block einschließt, durch einen entsprechenden eines Superblocks, einer Ebene, einer Bank oder eines Kanals, der einen zweiten Block einschließt, ersetzt, wobei der zweite Block den niedrigsten Löschzählerwert der zweiten Zone (450) aufweist.

5. Speichervorrichtung nach einem der Ansprüche 1 bis 4, wobei der Speichercontroller (121) konfiguriert ist, zum:

Bestimmen einer ersten logischen Adresse, die dem ersten Block entspricht,
Bestimmen einer zweiten logischen Adresse, die einem zweiten Block mit dem niedrigsten Löschzählerwert entspricht, und
Ersetzen der ersten logischen Adresse durch die zweite logische Adresse.

6. Speichervorrichtung nach einem der Ansprüche 1 bis 5, wobei der Speichercontroller (121) konfiguriert ist, zum:

Bestimmen einer Vielzahl erster logischer Adressbereiche, die Blöcken mit einem hohen Löschzählerwert oberhalb eines festgelegten hohen Schwellenwerts in der ersten Zone (440) entsprechen,
Bestimmen einer Vielzahl zweiter logischer Adressbereiche, die Blöcken mit einem niedrigen Löschzählerwert unterhalb eines festgelegten niedrigen Schwellenwerts in der zweiten Zone (450) entsprechen, und
Ersetzen der Vielzahl der ersten logischen Adressbereiche und der Vielzahl der zweiten logischen Adressbereiche untereinander, mithilfe einer Ersetzungstabelle, die angibt, ob jeder der Vielzahl von ersten logischen Adressbereichen ersetzt wird.

7. Speichervorrichtung nach einem der Ansprüche 1 bis 6, wobei der Speichercontroller (121) so konfiguriert ist, dass er die logische Adresse einer physischen Adresse einer Adresszuordnungstabelle zuordnet, die der zweiten Zone (450) entspricht, sodass die Löschzählerwerte der in der ersten Zone (440) und der zweiten Zone (450) eingeschlossenen Blöcke gleichmäßig sind.

8. Speichervorrichtung nach einem der Ansprüche 1 bis 7, wobei der Speichercontroller (121) so konfiguriert ist, dass er die erste Zone (440) anhand eines beliebigen Bitwerts der logischen Adresse bestimmt.

9. Speichervorrichtung nach einem der Ansprüche 1 bis 8, wobei der Speichercontroller (121) so konfiguriert ist, dass er eine Hash-Operation auf der logischen Adresse durchführt und die erste Zone (440) auf der Grundlage eines Hash-Wertes der logischen Adresse bestimmt.

10. Speichervorrichtung nach einem der Ansprüche 1 bis 9, wobei der Speichercontroller (121) so konfiguriert ist, dass er die erste Zone (440) durch Eingabe der logischen Adresse in ein trainiertes maschinelles Lernmodell mit einem Merkmal einer Schreibanforderungseingabe vom Host (110) bestimmt.

11. Betriebsverfahren einer Speichervorrichtung (120), umfassend:

Unterteilen einer Vielzahl von Blöcken, die in einem nichtflüchtigen Speicher (123) eingeschlossen sind, in eine Vielzahl von Zonen (440, 450);
Bereitstellen einer Vielzahl von Adresszuordnungstabellen, die der Vielzahl von Zonen entsprechen und Zuordnungsinformationen einer logischen und einer physischen Adresse speichern;
Empfangen einer logischen Adresse von einem Host (110);
Bestimmen einer ersten Zone (440) aus der Vielzahl von Zonen (440, 450), die der logischen Adresse entspricht, basierend auf der logischen Adresse;
Zuordnen der logischen Adresse zu einer physischen Adresse, die einem ersten Block der ersten Zone (440) entspricht;
Aktualisieren einer Zuordnungstabelle der ersten Zone (440) durch Ersetzen mindestens einer der logischen Adresse oder des ersten Blocks durch eine logische Adresse oder einen Block einer zweiten Zone (450) der Vielzahl von Zonen (440, 450), basierend auf einem Löschzählerwert des ersten Blocks, wobei die zweite Zone (450) sich von der ersten Zone (440) unterscheidet; und
Zuordnen, durch eine Flash-Translation-Schicht (FTL) (122) der Speichervorrichtung, von logischen Adressen zu Adresszuordnungstabellen, die jeder Zone entsprechen, sodass die Bits, die physische Adressen darstellen, in den Adresszuordnungstabellen reduziert werden können.

**12.** Betriebsverfahren der Speichervorrichtung nach Anspruch 11, wobei das Ersetzen das Ersetzen des ersten Blocks durch einen zweiten Block mit dem niedrigsten Löschzählerwert der zweiten Zone (450) umfasst.

**13.** Betriebsverfahren der Speichervorrichtung nach Anspruch 11 oder 12, wobei das Bestimmen einer ersten Zone (440) aus der Vielzahl von Zonen (440, 450), die der logischen Adresse entspricht, Folgendes umfasst:

Bestimmen der ersten Zone (440) anhand eines zufälligen Bitwerts der logischen Adresse;
Ausführen einer Hash-Operation auf der logischen Adresse und Bestimmen der ersten Zone (440) basierend auf einem Hash-Wert der logischen Adresse; oder
Bestimmen der ersten Zone (440), indem die logische Adresse in ein trainiertes maschinelles Lernmodell mit einem Merkmal einer Schreibanforderungseingabe vom Host (110) eingegeben wird.

**Revendications**

**1.** Dispositif de stockage comprenant :

une mémoire non volatile (123) incluant une pluralité de blocs ; et
un dispositif de commande de stockage (121) configuré pour :

diviser la pluralité de blocs en une pluralité de zones (440, 450) et fournir une pluralité de tables de mappage d'adresses qui correspondent à la pluralité de zones et stockent des informations de mappage d'une adresse logique et d'une adresse physique ;
déterminer une première zone (440) de la pluralité de zones (440, 450) correspondant à une adresse logique reçue d'un hôte (110) sur la base d'une valeur de l'adresse logique, mapper l'adresse logique sur une adresse physique correspondant à un premier bloc dans la première zone (440), et
remplacer au moins l'un de l'adresse logique ou du premier bloc par une adresse logique ou un bloc d'une seconde zone (450) de la pluralité de zones (440, 450), la seconde zone (450) étant différente de la première zone (440),

dans lequel le dispositif de commande de stockage comprend une couche de traduction Flash, FTL, (122) configurée pour mapper des adresses logiques sur des tables de mappage d'adresses correspondant à chaque zone, de sorte que des bits représentant des adresses physiques puissent être réduits dans les tables de mappage d'adresses.

**2.** Dispositif de stockage selon la revendication 1, dans lequel le dispositif de commande de stockage (121) est configuré pour remplacer le premier bloc par un second bloc présentant une valeur de comptage d'effacements la plus basse de la seconde zone (450).

**3.** Dispositif de stockage selon la revendication 2, dans lequel l'adresse physique du premier bloc et l'adresse physique du second bloc sont identiques.

**4.** Dispositif de stockage selon l'une quelconque des revendications 1, 2 ou 3, dans lequel le dispositif de commande de stockage (121) est configuré pour remplacer l'un parmi un super bloc, un plan, une banque et un canal incluant le premier bloc par l'un correspondant parmi un super bloc, un plan, une banque et un canal incluant un second bloc, le second bloc présentant une valeur de comptage d'effacements la plus basse de la seconde zone (450).

5. Dispositif de stockage selon l'une quelconque des revendications 1 à 4, dans lequel le dispositif de commande de stockage (121) est configuré pour :

déterminer une première adresse logique correspondant au premier bloc,
déterminer une seconde adresse logique correspondant à un second bloc présentant une valeur de comptage d'effacements la plus basse, et
remplacer la première adresse logique par la seconde adresse logique.

6. Dispositif de stockage selon l'une quelconque des revendications 1 à 5, dans lequel le dispositif de commande de stockage (121) est configuré pour :

déterminer une pluralité de premières plages d'adresses logiques correspondant à des blocs présentant une valeur de comptage d'effacements élevée au-dessus d'un seuil de valeur élevée spécifié dans la première zone (440),
déterminer une pluralité de plages d'adresses logiques secondaires correspondant à des blocs présentant une faible valeur de comptage d'effacements inférieure à un seuil de valeur basse spécifié dans la seconde zone (450), et
remplacer la pluralité de premières plages d'adresses logiques et la pluralité de secondes plages d'adresses logiques l'une par l'autre à l'aide d'une table de remplacement indiquant si chacune de la pluralité de premières plages d'adresses logiques est remplacée.

7. Dispositif de stockage selon l'une quelconque des revendications 1 à 6, dans lequel le dispositif de commande de stockage (121) est configuré pour mapper l'adresse logique sur une adresse physique d'une table de mappage d'adresses correspondant à la seconde zone (450) de telle sorte que des valeurs de comptage d'effacements de blocs inclus dans la première zone (440) et la seconde zone (450) sont uniformes.

8. Dispositif de stockage selon l'une quelconque des revendications 1 à 7, dans lequel le dispositif de commande de stockage (121) est configuré pour déterminer la première zone (440) sur la base d'une valeur binaire arbitraire de l'adresse logique.

9. Dispositif de stockage selon l'une quelconque des revendications 1 à 8, dans lequel le dispositif de commande de stockage (121) est configuré pour réaliser une opération de hachage sur l'adresse logique et déterminer la première zone (440) sur la base d'une valeur de hachage de l'adresse logique.

10. Dispositif de stockage selon l'une quelconque des revendications 1 à 9, dans lequel le dispositif de commande de stockage (121) est configuré pour déterminer la première zone (440) en saisissant l'adresse logique dans un modèle d'apprentissage automatique entraîné avec une caractéristique d'une entrée de requête d'écriture de l'hôte (110).

11. Procédé de fonctionnement d'un dispositif de stockage (120), comprenant :

la division d'une pluralité de blocs inclus dans une mémoire non volatile (123) en une pluralité de zones (440, 450) ;
la fourniture d'une pluralité de tables de mappage d'adresses qui correspondent à la pluralité de zones et stockent des informations de mappage d'une adresse logique et d'une adresse physique ;
la réception d'une adresse logique d'un hôte (110) ;
la détermination d'une première zone (440) de la pluralité de zones (440, 450) correspondant à l'adresse logique, sur la base de l'adresse logique ;
le mappage de l'adresse logique sur une adresse physique correspondant à un premier bloc de la première zone (440) ;
la mise à jour d'une table de mappage de la première zone (440) en remplaçant au moins l'un de l'adresse logique ou du premier bloc par une adresse logique ou un bloc d'une seconde zone (450) de la pluralité de zones (440, 450), sur la base d'une valeur de comptage d'effacements du premier bloc, la seconde zone (450) étant différente de la première zone (440) ; et
le mappage, par une couche de traduction Flash, FTL, (122) du dispositif de stockage, d'adresses logiques sur des tables de mappage d'adresses correspondant à chaque zone, de sorte que des bits représentant des adresses physiques puissent être réduits dans les tables de mappage d'adresses.

**12.** Procédé de fonctionnement du dispositif de stockage selon la revendication 11, dans lequel le remplacement comprend le remplacement du premier bloc par un second bloc présentant une valeur de comptage d'effacements la plus basse de la seconde zone (450).

**13.** Procédé de fonctionnement du dispositif de stockage selon la revendication 11 ou 12, dans lequel la détermination d'une première zone (440) de la pluralité de zones (440, 450) correspondant à l'adresse logique comprend :

la détermination de la première zone (440) sur la base d'une valeur binaire aléatoire de l'adresse logique ;
la réalisation d'une opération de hachage sur l'adresse logique et la détermination de la première zone (440) sur la base d'une valeur de hachage de l'adresse logique ; ou
la détermination de la première zone (440) en entrant l'adresse logique dans un modèle d'apprentissage automatique entraîné avec une caractéristique d'une entrée de requête d'écriture de l'hôte (110).

# FIG. 1

100

120 STORAGE DEVICE

110

121

HOST

STORAGE CONTROLLER

NVM — 123a

NVM — 123b

123

FTL

NVM — 123h

122

# FIG. 2

STORAGE CONTROLLER 200

PROCESSOR 210

RAM 220
FTL 230

HOST I/F 240

BUFFER MANAGER 250

FLASH I/F 260

FROM/TO HOST

FROM/TO NONVOLATILE MEMORY

BUFFER MEMORY 252

# FIG. 3

<u>300</u>

VERS

350    320    310

PWR → VOLTAGE GENERATOR → VS → ADDRESS DECODER

SSL
WL
GSL

MEMORY CELL ARRAY

PL0 | BLK0a | BLK0b | ⋯ | BLK0h
PL1 | BLK1a | BLK1b | ⋯ | BLK1h
PL3 | BLK3a | BLK3b | ⋯ | BLK3h
PL3 | BLK3a | BLK3b | ⋯ | BLK3h

CON    R_ADDR    BL

CMD →
ADDR →
CONTROL CIRCUIT

PBC → PAGE BUFFER CIRCUIT ~330

DL

C_ADDR → DATA I/O CIRCUIT ~340

DATA

360

EP 4 394 611 B1

FIG. 4

# FIG. 5

START

DETERMINE A NUMBER OF ZONES — S500

DETERMINE STRUCTURE OF EACH ZONE — S510

# FIG. 6

<u>600</u>

EP 4 394 611 B1

# FIG. 7
## 700

EP 4 394 611 B1

# FIG. 8

<u>800</u>

# FIG. 9

```
          ┌─────────────┐
          │    START    │
          └─────────────┘
                 │
                 ▼
┌───────────────────────────────────┐
│      RECEIVE LBA FROM HOST        │──── S900
└───────────────────────────────────┘
                 │
                 ▼
┌───────────────────────────────────┐
│  DETERMINE ZONE CORRESPONDING TO LBA │──── S910
└───────────────────────────────────┘
                 │
                 ▼
┌───────────────────────────────────┐
│  MAP LBA TO PPN OF DETERMINED ZONE │──── S920
└───────────────────────────────────┘
```

# FIG. 10

1000

EP 4 394 611 B1

# FIG. 11

<u>1100</u>

EP 4 394 611 B1

# FIG. 12

1200

# FIG. 13

```
            ┌─────────────┐
            │    START    │
            └──────┬──────┘
                   │
                   ▼
   ┌───────────────────────────────────┐
   │  DETECT ERASE COUNT (EC) INFORMATION │──── S1300
   │           OF EACH BLK              │
   └───────────────┬───────────────────┘
                   │
                   ▼
   ┌───────────────────────────────────┐
   │ RE-MAP LPN TO PPN BASED ON EC INFORMATION │──── S1310
   └───────────────────────────────────┘
```

FIG. 14

# FIG. 15

1512    1500

NVM11

1514    PL0 | BLK0a | BLK0b | ··· | BLK0h

1510    PL1 | BLK1a | BLK1b | ··· | BLK1h

PL2 | BLK2a | BLK2b | ··· | BLK2h

PL3 | BLK3a | BLK3b | ··· | BLK3h

1522    1500

NVM21

1524    PL0 | BLK0a | BLK0b | ··· | BLK0h

1520    PL1 | BLK1a | BLK1b | ··· | BLK1h

PL2 | BLK2a | BLK2b | ··· | BLK2h

1528    PL3 | BLK3a | BLK3b | ··· | BLK3h    1526

# FIG. 16

# FIG. 17

# FIG. 18

SWAP TABLE

# FIG. 19

EP 4 394 611 B1

# FIG. 20

EP 4 394 611 B1

## REFERENCES CITED IN THE DESCRIPTION

**Patent documents cited in the description**

- US 2019108889 A